(19) **Europäisches Patentamt**

**European Patent Office**

**Office européen des brevets**

(11) **EP 0 693 336 A2**

(12) **EUROPÄISCHE PATENTANMELDUNG**

(43) Veröffentlichungstag:
   24.01.1996 Patentblatt 1996/04

(51) Int. Cl.⁶: **B22D 1/00**, C22C 33/08,
   F16D 65/02, F16D 65/12

(21) Anmeldenummer: 95103223.4

(22) Anmeldetag: 07.03.1995

(84) Benannte Vertragsstaaten:
   **AT BE DE ES FR GB IT NL PT SE**

(30) Priorität: **22.07.1994 DE 4426091**

(71) Anmelder: **M. BUSCH GmbH & Co. KG**
   **D-59909 Bestwig (DE)**

(72) Erfinder:
   • **Busch, Hans-Peter, Dipl.-Ing.**
     **D-59939 Olsberg (DE)**
   • **Nissen, Andreas, Dipl.-Ing.**
     **D-59939 Olsberg (DE)**

(74) Vertreter: **Sroka, Peter-Christian, Dipl.-Ing.**
   **D-40545 Düsseldorf (DE)**

(54) **Verfahren zur Herstellung einer Gusseisenlegierung für Bremsscheiben und Bremstrommeln von Fahrzeugen**

(57)   Bei einem Verfahren zur Herstellung einer Gußeisenlegierung für Bremsscheiben und Bremstrommeln von Fahrzeugen, werden

- in einer ersten Stufe eine phosphorarme, flüssige Gußeisenbasislegierung zur Einstellung einer Wärmeleitfähigkeit von mindestens 46 W/Km (bei Temperaturen von 0 - 100°C), eines niedrigen E-Moduls und relativ niedriger Härte ( < 200 Brinell-Einheiten) zunächst mit stickstoffhaltigen Aufkohlungsmitteln auf 3,6 - 3,9 % Kohlenstoff aufgekohlt und dabei auf einen Stickstoffgehalt von 0,005 bis 0,025 % N gebracht,
- in einer zweiten Stufe zur Perlitstabilisierung des Eisens und Erhöhung der Zugfestigkeit ohne wesentliche oder schädliche Anhebung des E-Moduls
      Cr 0,2 - 0,4%
      Cu 0,2 - 0,4%
      Ni 0,1 - 0,3%
      Mo 0,1 - 0,2%

zulegiert,

- und in einer dritten Stufe durch die Zugabe der Stickstoff-bindenden Elemente
      Zirkon bis 0,1%, vorzugsweise 0,06%
      Niob/Tantal bis 0,1%, vorzugsweise 0,05%
      Titan bis 0,12%, vorzugsweise 0,07%
      und/oder Vanadium bis 0,2 %, vorzugsweise 0,15%

im Grundgefüge des Eisens feinverteilte, extrem harte und hochschmelzende Carbonitrid-Kristalle ausgeschieden.

EP 0 693 336 A2

**Beschreibung**

Die Erfindung bezieht sich auf hochwärmeleitende, temperaturwechselbeständige Gußeisenlegierungen mit relativ hoher Zugfestigkeit und günstigem Verschleiß- und Reibverhalten für Scheiben- oder Trommelbremsen von Fahrzeugen. Die Sicherheit, Wirksamkeit und Dauerhaltbarkeit der Bremsen von Schienen- und Straßenfahrzeugen besitzt höchste Priorität. Weil die verschiedenartigen Anforderungen an den Bremsenwerkstoff sich zum Teil gegenseitig ausschließen, sind optimale Lösungen erforderlich.

Zum Stand der Technik gehören:

1. Der Einsatz von perlitischem Grauguß mit hoher Zugfestigkeit, mäßiger Brinellhärte und hohem Abriebwiderstand.

Ein Legierung dieser Art ist zum Beispiel im der USA-Patentschrift 1 910 034 beschrieben. Perlitisches Gefüge wird ferner in dem deutschen Patent 705 688 gefordert und weiter im dem Buch von Piwowarski "Hochwertiges Gußeisen" 1951 in Kombination mit groblamellarem Graphit zur Sicherung der Verschleißfestigkeit erwähnt;

2. Die Verwendung von hochgekohltem Gußeisen mit einem Anteil von 3,6 - 4,0 % C gemäß DE 19 16 272 A1 (1969). Dieser Werkstoff soll einen hohen Verschleißwiderstand und eine gute Dämpfung gegen mechanisch erzeugte Schwingungen aufweisen. Da dieser Werkstoff übereutektisch ist, kann er zur Perlitstabilisierung mit Kupfer, Zinn oder Molybdän legiert werden;

3. Die gemäß DE 19 08 856 A1 (1969), wonach für Laufflächen von Zylinderbuchsen zur Vermeidung von Verschleiß und zur Verbesserung der Notlaufeigenschaften ein perlitisches Eisen mit mehr als 3,7 % C mit Zusätzen vom Chrom, Molybdän, Nickel, Kupfer und Zinn eingesetzt wird. Es soll die Anfälligkeit von Kolbenringen gegen "Brandspurbildung" verringern;

4. Der ausführliche Bericht in VDG-Schriftenreihe, (Heft 3/1977), "Konstruieren und Gießen" über "Thermoschockverhalten von Gußeisen". In dieser Veröffentlichung wird sehr ausführlich über das Verhalten von Gußeisenwerkstoffen bei Temperaturwechsel und Thermoschock mit dem Schwerpunktanwendungen bei Kokillen, Zylinderköpfen, Abgaskrümmern, Bremstrommeln und Oberbauteilen berichtet.

Zunächst werden die Werkstoffschädigungen durch Temperaturwechsel und ihre Ursachen in Form der Materialspannungen, die sich durch die begrenzte Temperaturleitfähigkeit aufbauen und die zu unterschiedlich starken Volumenänderungen bzw. Verzug führen, beschrieben:

"Die in allen Temperaturbereichen auftretenden Spannungen, die schließlich zum Reißen des Teiles führen können, beruhen darauf, daß sich infolge der begrenzten Temperaturleitfähigkeit beim Erwärmen oder Abkühlen Temperaturdifferenzen aufbauen, die zu unterschiedlich starkem Volumenänderungen führen. Für die als Zug- oder Druckspannungen auftretenden Spannungen $\sigma_{th}$ gilt:

$$\sigma_{th} = p \cdot E \cdot \alpha \cdot \Delta T$$

Es bedeuten:

E    = Elastizitätsmodul,
$\alpha$    = thermischer Ausdehnungskoeffizient,
$\Delta T$    = Temperaturdifferenz,
p    = Proportionalitätsfaktor.

Der Elastizitätsmodul und der thermische Ausdehnungskoeffizient sind temperaturabhängig. Für dem Elastizitätsmodul besteht bei Gußeisen mit Lamellengraphit auch die Abhängigkeit vom augenblicklichen und früheren Spannungszuständen und von der Spannungsart."

Danach ist es vor allem wichtig, den E-Modul niedrig zu halten.

Der thermische Ausdehnungskoeffizient kann nur wenig beeinflußt werden, wohl dagegen bei prinzipiell kühlbarem Gußteilen die Temperaturdifferenz durch hohe Wärmeleitfähigkeit. Es wird durch Versuchsergebnisse belegt, daß ein umlegierter Grauguß mit 3,7 % C und 1,67 % Si wegen des niedrigen E-Moduls von 50.000 N/mm² und geringerer Festigkeit vom ca. 120 N/mm² nach dem Abkühlen von hohem Temperaturen (bis 900° C) die niedrigsten Zugspannungen aufweist.

Eingehend wird auf dem Einfluß der Werkstoffeigenschaften auf das Entstehen von Spannungen hingewiesen. Dort heißt es u.a.:

"Festigkeit, Wärmeausdehnungskoeffizient, Wärmeleitfähigkeit und E-Modul sinken mit steigender Temperatur, während die Zähigkeitswerte zum Teil zunehmen. Bei Gußeisen mit Lamellengraphit nimmt außerdem der E-Modul bei Belastungen ab, wobei die Abnahme bei Zugbelastungen steiler als bei Druckbelastungen erfolgt. Gemäß obiger Gleichung sind für den Spannungsaufbau vor allem der thermische Ausdehnungskoeffizient, die Temperaturdifferenz und der E-Modul von Bedeutung. Der thermische Ausdehnungskoeffizient schwankt nur in geringen Grenzen, er kann bei niedrig legiertem Gußeisen nur geringfügig beeinflußt werden.

Maßgebend für die Temperaturdifferenz ist die Temperaturleitfähigkeit a, die mit der Wärmeleitfähigkeit $\lambda$ wie folgt verknüpft ist:

$$a = \frac{\lambda}{c_p^w \cdot \varrho}$$

$C_p^w$ = wahre spezifische Wärme $\rho$ = Dichte

Die Wärmeleitfähigkeit hängt vor allem von der Graphitform ab. Gußeisen mit Lamellengraphit hat die höchste, Gußeisen mit Kugelgraphit die geringste Leitfähigkeit. Bei Gußeisen mit Lamellengraphit nimmt sie mit steigender Graphitmenge und steigendem Verzweigungsgrad der Graphitlamellen zu."

Die Wärmeleitfähigkeit der Grundmasse wird durch Silizium stark vermindert, während alle anderen Legierungselemente einen vergleichsweise geringen Einfluß haben.

"Der E-Modul der Gußeisenwerkstoffe wird in erster Linie von der Graphitform bestimmt. Gußeisen mit Lamellengraphit hat den niedrigsten, Gußeisen mit Kugelgraphit den höchsten E-Modul. Während bei Gußeisen mit Kugelgraphit die Graphitmenge den E-Modul nur wenig beeinflußt, ist sie bei Gußeisen mit Lamellengraphit die entscheidende Einflußgröße. Für unlegiertes perlitisches Gußeisen mit Zugfestigkeiten bis 250 N/mm² gilt für 30-mm-Probestäbe nach der Auswertung von rd. 1200 Betriebsproben die Regressionsgleichung (9, 10);
$E_o$ = 319350 - 49980 % C - 14360 % Si in N/mm² (Gl. 3)
Die Reststreuung $S_R$ beträgt 6890 N/mm².

Von sekundärem Einfluß auf den E-Modul sind die Ausbildungsformen des Lamellengraphits, die Zellenzahl, Ausbildung der Grundmasse und ihre durch Legierungselemente beeinflußte Festigkeit und Härte; hierdurch kann bei Gußeisen mit Lamellengraphit der E-Modul um 10 - 15% verändert werden.

Für den Spannungsaufbau bei Temperaturwechseln ist ein hochgekohltes Gußeisen mit Lamellengraphit am günstigsten, da es aufgrund der höheren Wärmeleitfähigkeit die geringsten Temperaturdifferenzen hat und bei gleicher Stauchung bzw. Dehnung die geringsten Spannungen auftreten, bzw. sich ein erheblicher Teil der Verformungen noch im elastischen Bereich vollzieht."

Ferner wird ausgeführt:
"Bei Gußeisen mit Lamellengraphit läßt sich das Problem, daß eine Festigkeitssteigerung zugleich eine Steigerung des E-Moduls und eine Senkung der Wärmeleitfähigkeit bedeutet, in begrenztem Umfang durch Ausnutzen der Reststreuung in der Beziehung zwischen Graphitgehalt und E-Modul bzw. Festigkeit lösen. Außerdem bietet sich die Verwendung von Werkstoffen mit niedriger relativer Härte (also hohem Quotienten $\sigma_B$/HB) an. Anzustreben ist also ein Eisen, das bei einem bestimmten Graphitgehalt einen möglichst niedrigen E-Modul und geringe Härte sowie eine möglichst hohe Zugfestigkeit, Dauerwechselfestigkeit, Kriechbeständigkeit und Duktilität besitzt. Dieses Ziel kann durch geeignete metallurgische Maßnahmen und besonders Zusatz von Legierungselementen erreicht werden, die die Festigkeit - aber nicht die Härte - und besonders die Warmfestigkeit stärker steigern als den E-Modul. Zur Verbesserung der Wärmeleitfähigkeit ist ein möglichst niedriger Siliciumgehalt vorteilhaft."

Außerdem wird dargelegt, daß Stahlwerkskokillen, die aus übereutektischem, flüssigen Roheisen hergestellt wurden, infolge des höheren Graphitgehaltes, des niedrigen E-Moduls und der höheren Wärmeleitfähigkeit wesentlich längere Lebensdauer erzielen als bei niedriger gekohlten Hämatitkokillen. Wichtig sei die Abwesenheit von Karbiden und Phosphiden im Gefüge, weil diese den E-Modul erhöhen und zu Frühausfällen führen.

Insgesamt werden für temperaturwechselbeanspruchte Teile folgende Alternativen genannt:

- Die Verwendung eines hochgekohlten Gußeisens mit Lamellengraphit, das bei möglichst hoher Festigkeit einen niedrigen E-Modul und hohe Wärmeleitfähigkeit besitzt,

oder

- die Verwendung von Gußeisen mit Kugelgraphit, möglicherweise Vermiculargraphit, bei denen die hohe Festigkeit und die Duktilität die infolge des hohen E-Moduls und der schlechteren Wärmeleitfähigkeit auftretenden Spannungen überkompensieren.

"Entsprechend lassen sich auch viele Probleme der praktischen Werkstoffauswahl unter Berücksichtigung der spezifischen Eigenschaften dieser beiden Werkstoffgruppen lösen. Typische Beispiele sind Stahlwerkskokillen, Auspuffkrümmer und Zylinderköpfe für hochbeanspruchte Dieselmotoren.

Gußeisen mit Lamellengraphit ist die erste Wahl, da die Teile aus diesem Werkstoff dank seiner günstigen Gußeigenschaften und guten Bearbeitbarkeit kostengünstiger produziert werden können. In dieser Werkstoffgruppe haben perlitische Eisen mit niedrigem E-Modul und hoher Wärmeleitfähigkeit, d.h. hohem Graphitgehalt, bei zugleich hoher Festigkeit die beste Temperaturwechselbeständigkeit. Aus Kostengründen ist die naheliegende Lösung gewöhnlich ein Werkstoff mit mittlerem Kohlenstoffgehalt von 3 bis 3,4 %. Vor allem seine Festigkeit und etwas weniger seine Temperaturwechselbeständigkeit können durch Zusatz von Legierungselementen, besonders Chrom und Molyodän (eventuell in Kombination mit Nickel und Kupfer), verbessert werden. Eine Verschärfung der Temperaturwechselbeanspruchung, die praktisch meist in Form einer Steigerung der Spitzentemperatur der Zyklen auftritt, kann dann nur mit einer Senkung des E-Moduls und Erhöhung der Wärmeleitfähigkeit durch Steigerung des Graphitgehaltes aufgefangen werden. Die damit verbundene Senkung der Zugfestigkeit kann in relativ weiten Grenzen durch Legieren aufgefangen werden."

5. In der DE 33 05 184 A1 (1983) werden für hochgekohlte GG-15-Eisen für Bremsscheiben und Bremstrommeln die Darlegungen der unter (4) genannten Veröffentlichung "Konstruieren und Gießen" aufgegriffen, und es wird ein Bremsenwerkstoff vorgeschlagen, der der Qualität GG-15 nach DIN 1691 - Gußeisen mit Lamellengraphit - entspricht. Er besteht aus einem hochgekohlten, phosphorarmen Grauguß ohne karbidische Einschlüsse, aber mit perlitischem Grundgefüge. Der hohe C-Gehalt soll durch Schmierwirkung das Verschleißverhalten und die Rostanfälligkeit verbessern; der Verzug bei thermischer Belastung soll gering sein. Wegen des C-Gehaltes von 3,7 - 3,9 % kann der Si-Gehalt aus Gründen der begrenzten Kohlenstofflöslichkeit des flüssigen Eisens nur bis auf etwa 2,5 % Si eingestellt werden.

Die niedrige Zugfestigkeit von ca. 150 N/mm² soll für Bremsenkörper ohne Nahen für Kraftfahrzeuge ausreichen.

6. Die Veröffentlichung "Konstruieren und Gießen" Nr. 4/1990 über den hochgekohlten Grauguß entsprechend der unter (5) behandelten Druckschrift.

In dieser Veröffentlichung wird über die Werkstoff-Neuentwicklung, über die thermischen Eigenschaften, über Prüfstandsversuche und über Konstruktionshinweise für Bremskörper aus GG-15 hochgekohlt, teilweise mit Cu, Cr und / oder Mo legiert, berichtet.

U.a. wird der sogenannte Eichelberg-Faktor

$$K = \frac{\sigma_W \cdot \lambda}{E \cdot \alpha}$$

mit

| | |
|---|---|
| $\sigma_W$ | = Warmzugfestigkeit |
| $\lambda$ | = Wärmeleitfähigkeit |
| $E$ | = Elastizitätsmodul |
| $\alpha$ | = Wärmeausdehnungskoeffizient |

als Maß für die Widerstandskraft gegen Thermorisse herangezogen. Dieser soll möglichst groß sein;

7. In der DE 29 15 217 C2 wird eine Methode zur Verbesserung der Temperatur- und Temperaturwechselbeständigkeit einer perlitischen Gußeisenlegierung üblicher Art, z.B. GG25 nach DIN 1691, durch Ausscheidung von Carbonitriden beschrieben. Wesentlicher Gedanke ist die Begrenzung des Festigkeitsabfalls der Legierung bei hohen Dauertemperaturen.

8. Die Patentschrift DE-PS 723 054 beschreibt einen Werkstoff für Lager, die aus einem Grauguß hergestellt wurden, der mit folgenden Elementen legiert wurde: 0,05 - 1,5 % Tantal und/oder Niob, 0,1 - 3,0 % Vanadin, zusätzlich können bis zu 20 % Nickel, 15 % Kupfer und 30 % Chrom zulegiert werden. Es wird zunächst in metallurgisch richtiger Weise behauptet, daß Zusätze von Tantal, Niob und Vanadin zu üblichem Grauguß die feinkristalline Ausscheidung von Graphit begünstigen. Dies gilt aber nur für Zusätze an der unteren Grenze der genannten Legierungsspanne. Eine Erhöhung dieser Gehalte, noch nicht einmal bis an die obere Grenze, führt zur Unterdrückung der Graphitausscheidung mit der Folge massiver Karbidausscheidungen, z.B. in Form des sogenannten "Ledeburites" (= Eutektikum $Fe_3C + \alpha$-Fe). Diese Ausscheidungen machen das Eisen nahezu völlig unbearbeitbar, es ist dann nur noch durch Schleifen zu formen. Diese metallurgischen Zusammenhänge sind offenbar nicht erkannt worden. Weitere Legierungszugaben von Ni, Cu und Cr (bis 30 %) führen zu martensitischen, bainitischen und/oder karbidisch erstarrenden Werkstoffen, die dem Zweck der vorliegenden Erfindung absolut widersprechen. Die Verwendungsmöglichkeiten der bekannten Legierungen sind unklar. Sinn und Zweck von Carbonitridausscheidungen sind in dem Patent nicht genannt und vermutlich noch nicht bekannt gewesen.

Zusammenfassung des Standes der Technik: Stand der Technik ist damit für den Teilbereich "Werkstoffe für Trommel- und Scheibenbremsen" die Verwendung von perlitischem Gußeisen mit Lamellengraphit in den Qualitäten GG-15 bis GG-25 nach DIN 1691 in unlegierter oder zum Zwecke der Perlitstabilisierung und/oder Warmzugfestigkeitserhöhung mit Cu, Ni, Cr, Mo oder Sn legierter Varietät. Überwiegend werden noch Graugußsorten mit Zugfestigkeiten bei etwa 250 N/mm² eingesetzt, die aber nur begrenzte Temperaturwechselfestigkeiten aufweisen, was unter anderem zu Verformungen, "Brandrissen" oder zu durchgehenden Rissen führt, und/oder die ungenügendes Verschleißverhalten zeigen. Die hochgekohlte Sonderqualität nach (5) (GG-15) ist hinsichtlich der Temperaturwechselfestigkeit bewährt, aber nur bedingt verschleißfest und in den nicht temperaturbelasteten Bremsenteilen bruchgefährdet.

Die Legierung nach (7) ist dagegen hinsichtlich der Volumenbeständigkeit wegen des hohen E-Moduls und der relativ niedrigen Wärmeleitfähigkeit nicht optimal.

Aufgabe der Erfindung ist es demnach, einen Gußeisenwerkstoff für Scheiben- oder Trommelbremsen zu schaffen, der bei hoher Wärmeleitfähigkeit, guter Dämpfung, niedrigem E-Modul und außerdem noch relativ hoher Zugfestigkeit im Bereich von 180 - 250 N/mm² eine hohe Verschleißfestigkeit aufweist.

Diese Aufgabe wird erfindungsgemäß gelöst durch einen Werkstoff, der nach dem folgenden Verfahren hergestellt ist:

1. Einschmelzen von sauberem, phosphorarmen Stahlschrott,
2. Aufkohlen und Aufsticken während des Einschmelzens mit stickstoffhaltigen Aufkohlungsmitteln auf 3,6 - 3, 9 % C und einen Stickstoffgehalt im flüssigen Eisen von 0,005 - 0,025 % N, gegebenenfalls auch durch Zugabe von besonderen Aufstickungsmitteln, z.B. Kalkstickstoff;

3. Legieren gemäß Schritt (2) erhaltenen Eisens mit
0,2 - 0,4 % Cr
0,2 - 0,4 % Cu
0,1 - 0,3 % Ni
0,1 - 0,2 % Mo,
wobei die Zugabemengen nur so hoch gewählt werden, wie die vorgeschriebene Zugfestigkeit es erfordert;
4. Einlegieren von kleinen Mengen an Zirkon, Niob / Tantal, Titan bis max. 0,12% und/oder Vanadium bis zu 0,2% in die Schmelze gemäß Schritt (3).

Die Konzentrationen der sonstigen in der Legierung enthaltenen Elemente ergeben sich aus der Kohlenstofflöslichkeit des flüssigen Eisens, den herstellungsbedingten Verunreinigungen und den allgemein bekannten Regeln der Gußeisenmetallurgie.

Das Ergebnis dieser Maßnahmen und Behandlungsfolgen ist eine Gußeisenlegierung für Bremstrommeln oder Bremsscheiben mit bisher nicht bekannten, vorteilhaften Eigenschaftskombinationen:
Hohe Wärmeleitfähigkeit, niedriger E-Modul, hoher Widerstand gegen Verformung und Thermoschockrisse, beliebig einstellbare Zugfestigkeit zur Vermeidung von Brüchen, günstiges Verschleiß- und Reibverhalten durch Perlitgefüge und Carbonitridausscheidungen, gute Dämpfung gegen Quietschgeräusche beim Bremsen und gute Bearbeitbarkeit.

Wenn auch die Forderungen nach hoher Festigkeit und hoher Temperaturwechselbeständigkeit an sich gegensätzlich sind, können sie durch die erfindungsgemäße Anwendung verschiedener metallurgischer Maßnahmen doch weitgehend erfüllt werden. Überraschenderweise hat sich dabei eine hervorragende, unerwartet hohe Verschleißfestigkeit ergeben.

Mit dem bekannten, eingangs geschilderten Verfahren gemäß (5) sind zwar hohe Wärmeleitfähigkeit und niedriger E-Modul sichergestellt, die Bauteilfestigkeit und das Verschleißverhalten liegen aber auf dem bisher üblichen, relativ niedrigen Niveau des Standes der Technik.

Die bekannte Legierung nach (7) ist hinsichtlich der Wärmeleitfähigkeit und Dämpfung gegen Quietschgeräusche beim Bremsen noch verbesserungsfähig.

Die Erfindung wird im folgenden anhand eines Beispiels erläutert, ohne daß damit der generelle Erfindungsumfang eingeschränkt wird:

In einem Induktionstiegelofen wurde sauberer, ausgesuchter Stahlschrott unter gleichzeitiger Zugabe von Aufkohlungsmaterial mit ca. 2 % Stickstoffgehalt aufgeschmolzen und durch Zugabe von Ferrosilizium, Ferromangan, Ferrochrom, Ferromolybdäh, Nickel und Kupfer auf folgende Endzusammensetzung eingestellt:

| C | 3,8 % | Cr | 0,22 % |
|-----|--------|-----|---------|
| Si | 1,8 % | Cu | 0,24 % |
| Mn | 0,70 % | Ni | 0,20 % |
| P* | 0,03 % | Mo | 0,12 % |
| S* | 0,05 % | N | 0,018 % |

\* Gehalte herstellungsbedingt
aus den Vormaterialien

Danach wurde das Eisen auf Vergießtemperatur im Bereich von 1500° C erhitzt und mit 0,10% Ti; 0,025% Nb und 0,12% V legiert.

Es wurden Probestücke in Form von Bremstrommeln abgegossen, an denen Härtewerte von 192 - 205 Brinelleinheiten und Zugfestigkeiten von 184 - 226 $N/mm^2$ ermittelt wurden. Bei der metallographischen Untersuchung zeigte sich groblamellarer Graphit in einer ferritfreien, perlitischen Grundmasse, in der zahlreiche kleine, feinverteilte Korbonitrid-Kristalle zu erkennen waren.

Auf dem Bremsenprüfstand wurde eine hervorragende Haltbarkeit der Bremstrommeln ohne die typische Fleckenbildung in der Bremsfläche und ohne Brandrisse festgestellt.

Aus den Zugversuchen wurden Werte für den E-Modul, z.B. nach der Sekantenmethode, ermittelt, die zwischen 40.000 und 70.000 $N/mm^2$ liegen. Wenn die Ermittlung des E-Moduls bei Grauguß auch problematisch ist, weil er sich bei Zug- oder Druckbelastung unterschiedlich verhält und weil Vorbelastungen zu abweichenden Werten führen, so kann doch mit diesen Werten der Eichelberg-Faktor (s.o.) abgeschätzt werden. Er liegt unerwartet hoch, d.h. daß die Widerstandskraft gegen Thermorisse groß ist, wie es die Prüfstandsversuche belegen.

**Patentansprüche**

1. Verfahren zur Herstellung einer Gußeisen-Legierung für Bremsscheiben und Bremstrommeln von Fahrzeugen, bei dem

   - in einer ersten Stufe eine phosphorarme, flüssige Gußeisenbasislegierung zur Einstellung einer Wärmeleitfähigkeit von mindestens 46 W/Km (bei Temperaturen von 0 - 100°C), eines niedrigen E-Moduls und relativ niedriger Harte ( < 200 Brinell-Einheiten) zunächst mit stickstoffhaltigen Aufkohlungsmitteln auf 3,6 - 3,9 % Kohlenstoff aufgekohlt und dabei auf einen Stickstoffgehalt von 0,005 bis 0,025 % N gebracht wird,

- in einer zweiten Stufe zur Perlitstabilisierung des Eisens und Erhöhung der Zugfestigkeit ohne wesentliche oder schädliche Anhebung des E-Moduls mit
  Cr 0,2 - 0,4%
  Cu 0,2 - 0,4%
  Ni 0,1 - 0,3%
  Mo 0,1 - 0,2%

legiert wird

- und in einer dritten Stufe durch die Zugabe der Stickstoff-bindenden Elemente
  Zirkon bis 0,1%, vorzugsweise 0,06%
  Niob/Tantal bis 0,1%, vorzugsweise 0,05%
  Titan bis 0,12%, vorzugsweise 0,07%
  und/oder Vanadium bis 0,2 %, vorzugsweise 0,15%

im Grundgefüge des Eisens feinverteilte, extrem harte und hochschmelzende Carbonitrid-Kristalle ausgeschieden werden.

2. Verfahren nach Anspruch 1, bei dem in der ersten Stufe, insbesondere durch Zugabe von Ferrosilizium, Ferromangan, Ferrochrom, Ferromolybdän, Nickel und Kupfer eine Gußeisenbasislegierung erschmolzen wird, die die folgenden Elemente in der Größenordnung von 3,8% C, 1,8% Si, 0,70% Mn, 0,03% P und 0,05% S enthält.

3. Bremsenkörper für Kraftfahrzeuge, bestehend aus einer Gußeisenlegierung, die gemäß den Ansprüchen 1 und 2 hergestellt ist.